# EUROPEAN PATENT APPLICATION

(11) **EP 4 580 013 A1**
(43) Date of publication of application: **02.07.2025**
(21) Application number: 23857270.5
(22) Date of filing: 16.08.2023
(51) Int. Cl.: H02K 15/02

(54) **METHOD FOR PRODUCING LAMINATED CORE, PRODUCTION DEVICE OF LAMINATED CORE, LAMINATED CORE, AND ROTATING ELECTRIC MACHINE**

(30) Priority: 23.08.2022 JP 2022132477
(71) Applicant: NIPPON STEEL CORPORATION, Chiyoda-ku Tokyo 100-8071 (JP)
(72) Inventor: MURAKAWA, Tesshu, Tokyo 100-8071 (JP); WAKISAKA, Takeaki, Tokyo 100-8071 (JP)
(74) Representative: Vossius & Partner Patentanwälte Rechtsanwälte mbB
(86) International application number: PCT/JP2023/029614
(87) International publication number: WO 2024/043157

(57) **Abstract**

Heating parts (212a to 2121, 222a to 2221) are brought into contact with planned heating regions (11a to 111) of outermost electrical steel sheets (10a, 10b) of an electrical steel sheet group (100), to simultaneously pressurize and heat the planned heating regions (11a to 11l).

## Description

### TECHNICAL FIELD

The present invention relates to a manufacturing method of a laminated core, a manufacturing apparatus of a laminated core, a laminated core, and a rotary electric machine. This application is based upon and claims the benefit of priority of the prior Japanese Patent Application No. 2022-132477, filed on August 23, 2022, the entire contents of which are incorporated herein by reference.

### BACKGROUND ART

As a core (iron core) used for a motor, a transformer, an inductor, and the like, there is a laminated core. The laminated core is configured by laminating soft magnetic material sheets such as electrical steel sheets. In the laminated core, there is a need to fix the laminated plurality of soft magnetic material sheets. As a method of fixing the soft magnetic material sheets, there is a method of making the soft magnetic material sheets adhere to each other.

As a technique of making the soft magnetic material sheets adhere to each other, there are techniques described in Patent Literatures 1, 2.

Patent Literature 1 describes the following. First, a plurality of electrical steel sheets are laminated. On sheet surfaces of the plurality of electrical steel sheets, there are formed coatings that exhibit adhesive ability through heating. Right before the plurality of electrical steel sheets are laminated, sheet surfaces of two electrical steel sheets being adhesion targets are respectively heated separately by local heating means. One electrical steel sheet out of the two electrical steel sheets heated as above is placed onto the other electrical steel sheet out of the two electrical steel sheets, and then pressurization is performed by a press machine. By heating the electrical steel sheets, the adhesive ability of the coatings is exhibited, and thus the sheet surfaces of the two electrical steel sheets are adhered to each other.

Further, Patent Literature 2 also describes that a plurality of electrical steel sheets having coatings that exhibit adhesive ability through heating, formed on sheet surfaces thereof, are adhered to each other. In the technique described in Patent Literature 2, at a time of laminating the electrical steel sheets, pressurization and heating are performed on the electrical steel sheets. This makes sheet surfaces of two electrical steel sheets in a positional relation of being adjacent to each other in a lamination direction, to be partially adhered to each other.

### CITATION LIST

### PATENT LITERATURE

Patent Literature 1: Japanese Patent No. 3745490
Patent Literature 2: Japanese Laid-open Patent Publication No. 2002-151335

### SUMMARY OF INVENTION

### TECHNICAL PROBLEM

However, in the technique described in Patent Literature 1, the unit of heating the electrical steel sheets and the unit of pressurizing the electrical steel sheets, are configured by the separate units. Therefore, it is not possible to efficiently perform the adhesion of the electrical steel sheets.

Further, in the technique described in Patent Literature 2, the electrical steel sheets are adhered when they are laminated. Therefore, the number of electrical steel sheets to be adhered at once, is limited to the number of electrical steel sheets to be laminated at once. Generally, the electrical steel sheets are laminated one by one. For this reason, the adhesion of a new electrical steel sheet with respect to the electrical steel sheet on the top out of the already-laminated (adhered) plurality of electrical steel sheets (a laminated core in the middle of production), has to be repeatedly performed many times. Accordingly, it is not possible to efficiently perform the adhesion of the electrical steel sheets.

The present invention has been made in view of the problems as described above, and an object thereof is to make it possible to efficiently perform adhesion of mutual soft magnetic material sheets when manufacturing a laminated core.

### SOLUTION TO PROBLEM

A manufacturing method of a laminated core of the present invention is a manufacturing method of a laminated core in which a laminated core is manufactured by using a plurality of soft magnetic material sheets each having an insulating coating that exhibits adhesive ability through heating, formed on an entire sheet surface thereof, the manufacturing method of the laminated core including: a lamination step of laminating the plurality of soft magnetic material sheets; and an adhesion step of making the plurality of soft magnetic material sheets laminated by the lamination step adhere to each other by making the adhesive ability to be exhibited, in which in the adhesion step, a heating part is brought into contact with a partial region of a sheet surface of an outermost soft magnetic material sheet to simultaneously pressurize and heat the region, and the outermost soft magnetic material sheet corresponds to a soft magnetic material sheet positioned at one end or both ends in a lamination direction, out of the plurality of soft magnetic material sheets laminated by the lamination step.

A manufacturing apparatus of a laminated core of the present invention is a manufacturing apparatus of a laminated core in which a laminated core is manufactured by using a plurality of soft magnetic material sheets each having an insulating coating that exhibits adhesive ability through heating, formed on an entire sheet surface thereof, the manufacturing apparatus of the laminated core including: a heating part that heats the soft magnetic material sheet for making the adhesive ability to be exhibited; a pressurization processing means that performs processing for making the heating part to be brought into contact with an outermost soft magnetic material sheet to pressurize the soft magnetic material sheet; and a heating processing means that performs processing for heating the soft magnetic material sheet by using the heating part, in which the outermost soft magnetic material sheet corresponds to a soft magnetic material sheet positioned at one end or both ends in a lamination direction, out of the plurality of soft magnetic material sheets that are laminated, and by making the heating part to be brought into contact with a partial region of a sheet surface of the outermost soft magnetic material sheet by using the pressurization processing means, and heating the soft magnetic material sheet with the heating part by using the heating processing means at the same time, the region is simultaneously pressurized and heated.

A first example of a laminated core of the present invention is a laminated core configured by laminating a plurality of soft magnetic material sheets each having an insulating coating that exhibits adhesive ability through heating, formed on an entire sheet surface thereof, in which the soft magnetic material sheets adjacent in a lamination direction are mutually adhered at partial regions of the sheet surfaces of the soft magnetic material sheets, the number of regions, at one sheet surface of the soft magnetic material sheet, adhered to the sheet surface of the soft magnetic material sheet adjacent in the lamination direction, is 0.3 × Nt or more and 6.0 × Nt or less, the laminated core is a stator core or a rotor core, when the laminated core is a stator core, Nt is the number of teeth of the stator core, and when the laminated core is a rotor core, Nt is the number of teeth of a stator core to be paired with the rotor core.

A second example of a laminated core of the present invention is a laminated core having a plurality of soft magnetic material sheets each having an insulating coating that exhibits adhesive ability through heating, formed on an entire sheet surface thereof, in which the laminated core is manufactured by steps including a lamination step of laminating the plurality of soft magnetic material sheets, and an adhesion step of making the plurality of soft magnetic material sheets laminated by the lamination step adhere to each other by making the adhesive ability to be exhibited, in the adhesion step, a heating part is brought into contact with a partial region of a sheet surface of an outermost soft magnetic material sheet to simultaneously pressurize and heat the region, and the outermost soft magnetic material sheet corresponds to a soft magnetic material sheet positioned at one end or both ends in a lamination direction, out of the plurality of soft magnetic material sheets laminated by the lamination step.

A rotary electric machine of the present invention includes the laminated core.

### BRIEF DESCRIPTION OF DRAWINGS

[Fig. 1] Fig. 1 is a view illustrating one example a planar shape of an electrical steel sheet.
[Fig. 2A] Fig. 2A is a view illustrating one example of an entire configuration of a manufacturing apparatus of a laminated core.
[Fig. 2B] Fig. 2B is a sectional view taken along I-I in Fig. 2A.
[Fig. 2C] Fig. 2C is a sectional view taken along II-II in Fig. 2A.
[Fig. 3] Fig. 3 is a view illustrating one example of an entire configuration of the manufacturing apparatus of the laminated core in a state where heating parts are brought into contact with sheet surfaces of electrical steel sheets.
[Fig. 4A] Fig. 4A is a view illustrating a first example of a positional displacement preventing part.
[Fig. 4B] Fig. 4B is a view illustrating a second example of the positional displacement preventing part.
[Fig. 5] Fig. 5 is a view illustrating one example of a rotary electric machine.

### DESCRIPTION OF EMBODIMENTS

Hereinafter, an embodiment of the present invention will be explained while referring to the drawings.

Note that when comparison targets such as lengths, positions, sizes and intervals are the same, this means not only a case where they are strictly the same but also a case where they are differed within a range that does not depart from the gist of the invention (differed within a tolerance range defined when designing, for example). Further, in each drawing, x-y-z coordinates indicate a relation of directions in the drawing. A symbol of white circle (∘) with black circle (•) given therein is a symbol expressing an arrow line directed from a far side toward a near side of the paper sheet. A symbol of white circle (∘) with cross mark (×) given therein is a symbol expressing an arrow line directed from the near side toward the far side of the paper sheet.

In the present embodiment, a laminated core is manufactured by laminating a plurality of soft magnetic material sheets each having an insulating coating that exhibits adhesive ability through heating, formed on an entire sheet surface thereof. In the explanation below, the insulating coating that exhibits the adhesive ability through heating, will be referred to as an adherable insulating coating, according to need. Note that the sheet surface is set to be both or one of a front surface and a rear surface of the soft magnetic material sheet. Further, the soft magnetic material sheet is set to include a base material and the insulating coating. Further, in the explanation below, a sheet surface of the soft magnetic material sheet in the middle of manufacture is set to indicate both or one of a front surface and a rear surface of the soft magnetic material sheet at a time point in the middle of the manufacture. Further, when the insulating coating exhibits the adhesive ability, a state of the insulating coating changes from a state where an adherend cannot be adhered to the film to a state where the adherend can be adhered to the film. Note that the insulating coating is preferably formed so as to cover an entire area of the sheet surface of the soft magnetic material sheet. It is only required that the insulating coating is formed on an area of 50% or more of an entire area of the sheet surface of the soft magnetic material sheet, preferably formed on an area of 70% or more of the entire area, and more preferably formed on an area of 90% or more of the entire area. As described above, the entire sheet surface indicates the area of 50% or more, preferably 70% or more, and more preferably 90% or more of the entire area of the sheet surface. By forming the insulating coating on the entire sheet surface of the soft magnetic material sheet, the necessity of finely adjusting the region of forming the insulating coating is eliminated, which makes it possible to efficiently manufacture the laminated core. Further, it is preferable that the area on which the insulating coating is formed on the sheet surface of the soft magnetic material sheet is as large as possible, since the adherend can be adhered to the insulating coating more securely. Note that as will be described later, in the present embodiment, the adhesive ability can be exhibited only at a partial region of the insulating coating, so that the region of forming the insulating coating and the region where the adhesive ability of the insulating coating is exhibited in an adhesion step, do not always have to be matched.

The laminated core is a laminated core used for various kinds of electric equipment and electronic parts, for example. Concrete examples of the laminated core include a laminated core provided to a transformer, a laminated core (a rotor core and a stator core) provided to a rotary electric machine (a motor and a power generator), and a laminated core provided to an inductor.

The soft magnetic material sheet is a sheet formed by using a soft magnetic material. The soft magnetic material sheet is, for example, an electrical steel sheet. The electrical steel sheet may also be a grain-oriented electrical steel sheet, or a non-oriented electrical steel sheet. The present embodiment exemplifies a case where a laminated core is manufactured by using an electrical steel sheet having an adherable insulating coating formed on an entire sheet surface thereof. The adherable insulating coating is preferably formed on two sheet surfaces (a front surface and a rear surface) of the electrical steel sheet. This is because, since there exist the adherable insulating coatings on two sheet surfaces that face each other when a plurality of electrical steel sheets are laminated, the electrical steel sheets can be adhered to each other more securely. However, it is only required that the adherable insulating coating exists on an entire sheet surface of at least one of the two sheet surfaces that face each other when the plurality of electrical steel sheets are laminated. Therefore, the adherable insulating coating may also be formed only on one sheet surface out of the two sheet surfaces of the electrical steel sheet.

The adherable insulating coating changes, when it exhibits the adhesive ability, from a state where an adherend (an electrical steel sheet, in the present embodiment) cannot be adhered to the film to a state where the adherend can be adhered to the film. Therefore, the state of the adherable insulating coating changes, through heating, from a state where the film cannot be adhered to the adherend to a state where the film can be adhered to the adherend. It is possible to check whether or not the adherable insulating coating exhibits the adhesive ability, by the following method, for example.

First, from an electrical steel sheet having a configuration same as that of the electrical steel sheet used for the laminated core, two rectangular electrical steel sheets are cut out. At this time, the adherable insulating coating formed on the entire sheet surface of each of the two electrical steel sheets, is in a state where the adhesive ability is not exhibited (specifically, in a state of not being heated). Further, a size of each of the two electrical steel sheets is 30 mm in width and 60 mm in length. The sheet surfaces of tip portions of such two electrical steel sheets are overlapped to each other. A size of an overlapped region (the sheet surfaces of the tip portions) is 30 mm in width and 10 mm in length. The two electrical steel sheets in which the sheet surfaces of the tip portions are overlapped to each other, are adhered under a condition including a steel sheet temperature of 180°C, a pressure of 10 MPa, and a pressurization time of one hour. Note that the steel sheet temperature (= 180°C) differs depending on components and the like of the adherable insulating coating. The steel sheet temperature is set to be equal to or more than a temperature that is previously determined as a temperature at which the adherable insulating coating exhibits the adhesive ability. The two electrical steel sheets adhered as above, are used as a test piece. Shearing tensile strength of the test piece is measured under a condition including an atmospheric temperature of 25°C, and a tensile rate of 3 mm/minute. A numeric value obtained by dividing the shearing tensile strength by an adhesion area (= 300 mm²) is calculated as adhesive strength (MPa). When the adhesive strength is 2.5 MPa or more, it can be determined that the adherable insulating coating exhibits the adhesive ability.

Further, it is also possible that the electrical steel sheet is collected from the laminated core, and the collected electrical steel sheet is used to produce a test piece having a configuration same as that of the above-described test piece. In this case, when the adhesive strength of the test piece is 2.5 MPa or more, it can be determined that the adherable insulating coating exhibits the adhesive ability in the laminated core. Note that when the adhesive strength of the test piece is 2.5 MPa or more, this corresponds to the fact that the adhesive strength of the electrical steel sheet in the laminated core is 2.5 MPa or more. Note that when the adhesive strength of the electrical steel sheet in the laminated core is 2.5 MPa or more, it can be determined that the electrical steel sheets are adhered to each other.

For the purpose of realizing not only improvement in insulation performance but also suppression of rust generation, and the like, an insulating coating is generally formed on a sheet surface of an electrical steel sheet in a finish annealing line or the like. It is also possible to realize the adherable insulating coating by making a thermosetting resin to be contained in this insulating coating, for example.

When the insulating coating that is generally formed on the electrical steel sheet is changed to the adherable insulating coating as above, there is a need to change an existing manufacturing line. For example, there is a need to change operation contents and a manufacturing facility between a case where the insulating coating that is generally formed on the electrical steel sheet is the adherable insulating coating and a case where the insulating coating is not the adherable insulating coating. Further, depending on the composition and the like of the insulating coating that is generally formed on the electrical steel sheet, there is a case where it is not easy to realize the adherable insulating coating that surely exhibits the adhesive ability.

For this reason, the insulating coating that is formed on the sheet surface of the electrical steel sheet in the finish annealing line or the like, may not be the adherable insulating coating (the insulating coating that exhibits the adhesive ability through heating). In this case, the insulating coating that is formed on the entire sheet surface of the electrical steel sheet in the finish annealing line or the like, is an insulating coating that does not exhibit the adhesive ability through heating. In the explanation below, the insulating coating that does not exhibit the adhesive ability through heating, will be referred to as a non-adherable insulating coating, according to need.

As described above, by using the non-adherable insulating coating, it is possible to realize not only the improvement in the insulation performance of the electrical steel sheet but also the suppression of the rust generation in the electrical steel sheet. From such a viewpoint, it is preferable that an adhesive that exhibits the adhesive ability through heating is coated onto the non-adherable insulating coating, to thereby form the adherable insulating coating on the entire sheet surface of the electrical steel sheet. Further, it is more preferable that the adhesive that exhibits the adhesive ability through heating is an insulating adhesive. In this case, the adherable insulating coating contains the insulating adhesive that exhibits the adhesive ability through heating. In the explanation below, the insulating adhesive that exhibits the adhesive ability through heating, will be referred to as an adhesive for sheet surface adhesion, according to need.

As described above, the entire sheet surface indicates the area of 50% or more, preferably 70% or more, and more preferably 90% or more of the entire area of the sheet surface. It is only required that the adhesive for sheet surface adhesion is formed on an area of 50% or more of the entire area of the sheet surface of the soft magnetic material sheet, preferably formed on an area of 70% or more of the entire area, and more preferably formed on an area of 90% or more of the entire area.

For example, with respect to the electrical steel sheet that is moving in the manufacturing line, the adhesive for sheet surface adhesion may also be continuously formed on the sheet surface (the non-adherable insulating coating) of the electrical steel sheet. The formation of the adhesive for sheet surface adhesion is realized through baking of the adhesive for sheet surface adhesion with respect to the non-adherable insulating coating, for example. Note that the movement of the electrical steel sheet in the manufacturing line is performed as follows, for example. First, a coiled electrical steel sheet (electrical steel strip) is set to an uncoiler disposed on an upstream side of the manufacturing line. Further, the electrical steel sheet is unwound from the uncoiler, and the electrical steel sheet is moved from the upstream side to a downstream side of the manufacturing line. During the movement of the electrical steel sheet, the adhesive for sheet surface adhesion is continuously formed on the sheet surface of the electrical steel sheet. Subsequently, the electrical steel sheet having the adhesive for sheet surface adhesion formed thereon is wound in a coiled state onto a coiler disposed on the downstream side of the manufacturing line.

Note that the formation of the adhesive for sheet surface adhesion may not be performed on the coiled electrical steel sheet. For example, it is also possible to form the adhesive for sheet surface adhesion on the sheet surface (non-adherable insulating coating) of the electrical steel sheet that is cut in accordance with a shape of the laminated core. However, if it is designed as above, it takes time to form the adhesive for sheet surface adhesion, when compared to a case where the adhesive for sheet surface adhesion is continuously formed, as described above.

Further, by using the insulating adhesive that exhibits the adhesive ability through heating, even if a type of packing at the time of shipment of the electrical steel sheet (the coiled or cut electrical steel sheet) is in a laminated state, the electrical steel sheets in the laminated state can be separated into individual electrical steel sheets. For example, in a case where an insulating adhesive that exhibits the adhesive ability at room temperature is used, if the type of packing at the time of shipment of the electrical steel sheet (the coiled or cut electrical steel sheet) is in a laminated state, the adhesive exhibits the adhesive ability, and thus processing thereafter becomes difficult. Further, in a case where the insulating adhesive that exhibits the adhesive ability at room temperature is used, there is a need to process the electrical steel sheet in a desired shape, and coat the adhesive onto each sheet surface at a time point of laminating the electrical steel sheets processed in the desired shape, resulting in that the productivity deteriorates.

A thickness of the adherable insulating coating is preferably thin within a range of exhibiting the adhesive ability. This is because a lamination factor of the laminated core can be increased. Note that the lamination factor of the laminated core is expressed by, for example, a ratio of a total cross-sectional area of the electrical steel sheets configuring the laminated core to an apparent cross-sectional area of the laminated core. As described above, the lamination factor of the laminated core indicates a larger value as the volume of the base material (soft magnetic material) contained in the laminated core increases.

The adhesive for sheet surface adhesion is not limited to a specific adhesive as long as it exhibits the adhesive ability through heating. For example, various kinds of adhesive such as an acrylic resin adhesive, a cyanoacrylate-based adhesive, an epoxy resin adhesive, a polyester adhesive, a polyurethane adhesive, a melamine resin adhesive, and a phenol resin adhesive, may also be used as the adhesive for sheet surface adhesion. As an example that is further suitable as the adhesive for sheet surface adhesion, there can be cited a thermosetting organic resin adhesive whose chemical reaction proceeds through heating. Concretely, an adhesive containing one kind or two kinds or more of resins such as an epoxy resin, a phenol resin, an urethane resin, and a melamine resin, as a main component, may also be used as the adhesive for sheet surface adhesion. Further, it is also possible to use a polyester resin and/or an acrylic resin and the like to which a crosslinking agent is added to give a thermosetting property thereto, as the adhesive for sheet surface adhesion. Further, it is also possible to use an inorganic adhesive in which a dehydration condensation reaction proceeds through heating to cause curing, as the adhesive for sheet surface adhesion.

Further, the adhesive for sheet surface adhesion may also be an anaerobic adhesive. In this case, the adhesive for sheet surface adhesion exhibits the adhesive ability through heating and blocking of air. Therefore, it is designed that when the non-adherable insulating coating and the adherend are adhered to each other, a space is prevented from being generated between the non-adherable insulating coating and the adherend. For example, it is also possible that the adhesive for sheet surface adhesion is coated onto the non-adherable insulating coating, and then by simultaneously performing heating of the adhesive for sheet surface adhesion and pressing of the non-adherable insulating coating and the adhesive for sheet surface adhesion, the adhesive for sheet surface adhesion is formed on the non-adherable insulating coating.

When the adhesive for sheet surface adhesion is formed on the non-adherable insulating coating as described above, the non-adherable insulating coating and the adhesive for sheet surface adhesion can be collectively regarded as the adherable insulating coating.

Note that the adhesive for sheet surface adhesion is preferably an insulating adhesive. This is because the insulating property of the electrical steel sheet can be increased. However, when the non-adherable insulating coating is formed on the sheet surface of the electrical steel sheet, for example, the adhesive for sheet surface adhesion may not be the insulating adhesive.

Further, when the non-adherable insulating coating is not formed on the sheet surface of the electrical steel sheet, the adherable insulating coating may also be formed on the entire sheet surface of the electrical steel sheet by coating the base material of the electrical steel sheet with the adhesive for sheet surface adhesion, for example. When the non-adherable insulating coating is not formed on the sheet surface of the electrical steel sheet, the insulating adhesive is used as the adhesive for sheet surface adhesion. Further, the adherable insulating coating is formed by the adhesive for sheet surface adhesion.

As described above, the entire sheet surface indicates the area of 50% or more, preferably 70% or more, and more preferably 90% or more of the entire area of the sheet surface. It is only required that the adhesive for sheet surface adhesion is formed on an area of 50% or more of the entire area of the sheet surface of the soft magnetic material sheet, preferably formed on an area of 70% or more of the entire area, and more preferably formed on an area of 90% or more of the entire area.

A method of forming the adhesive for sheet surface adhesion on the base material of the electrical steel sheet may also be, for example, a method similar to that of forming the adhesive for sheet surface adhesion on the non-adherable insulating coating.

As described above, the component, the composition, and the like of the insulating coating may be adjusted to give the adhesive ability to the insulating coating itself, thereby making the insulating coating turn into the adherable insulating coating.

Further, the insulating adhesive that exhibits the adhesive ability through heating may also be coated onto the sheet surface of the electrical steel sheet to form an adhesive layer, to thereby use the adhesive layer as the adherable insulating coating. In this case, the adhesive layer possesses the insulating property and the adhesive ability.

Other than the above, a coating such as an adhesive layer that exhibits the adhesive ability through heating may also be formed on the insulating coating, to thereby give the adhesive ability to the insulating coating. In this case, the insulating coating, the adhesive layer, and the like can be collectively regarded as the adherable insulating coating. Note that the adhesive layer and the like may also be partially formed by coating a partial region of a region of a surface (on a surface) of the insulating coating formed on the entire sheet surface of the electrical steel sheet, with the adhesive and the like. In this case, the adhesive layer may also be formed on an area of 50% or more of the entire area of the sheet surface of the soft magnetic material sheet, preferably formed on an area of 70% or more of the entire area, and more preferably formed on an area of 90% or more of the entire area.

Note that the soft magnetic material sheet is not limited to the electrical steel sheet. The soft magnetic material sheet may also be, for example, any one of an amorphous alloy thin sheet, a nanocrystal alloy thin sheet, a Permendur sheet, and a permalloy sheet. Further, in the soft magnetic material sheet that does not have the non-adherable insulating coating, the adherable insulating coating may also be formed on the base material.

The insulating coating that exhibits the adhesive ability through heating shrinks at the time of heating, to thereby exhibit its adhesive ability. Accordingly, when the electrical steel sheet having the adherable insulating coating formed on the sheet surface thereof is heated to make the adhesive ability of the adherable insulating coating to be exhibited, a compressive stress may be applied to the electrical steel sheet. When the compressive stress is applied to the electrical steel sheet, a core loss of the electrical steel sheet may be increased. Therefore, by making sheet surfaces of two electrical steel sheets adjacent in the lamination direction to be partially adhered to each other by the adhesive ability possessed by the adherable insulating coatings, it is possible to reduce the compressive stress that is applied to the electrical steel sheets. However, when the means of heating the electrical steel sheet and the means of pressurizing the electrical steel sheet are configured by the separate means, as in the technique of Patent Literature 1 described above, it takes time to perform the adhesion of electrical steel sheets. Further, when the electrical steel sheets are adhered at the time of lamination, as in the technique of Patent Literature 2 described above, the adhesion of electrical steel sheets has to be repeatedly performed many times. Therefore, also in the technique described in Patent Literature 2, it takes time to perform the adhesion of electrical steel sheets. Consequently, the present embodiment exemplifies a case where a laminated core is manufactured by steps including a lamination step and an adhesion step to be exemplified below, in order to efficiently perform the adhesion of mutual electrical steel sheets.

### (Lamination step)

In the lamination step of the present embodiment, a plurality of electrical steel sheets are laminated. In the lamination step, the adhesive ability of the adherable insulating coating is not exhibited. Specifically, in the lamination step, the electrical steel sheet is not heated to a temperature equal to or more than a temperature at which the adhesive ability of the adherable insulating coating is exhibited. The temperature at which the adhesive ability of the adherable insulating coating is exhibited is determined by a specification of the adherable insulating coating presented by a manufacturer of the adherable insulating coating, for example. When the adhesive for sheet surface adhesion is used to form the adherable insulating coating, the temperature at which the adhesive ability of the adherable insulating coating is exhibited is determined by a specification of the adhesive for sheet surface adhesion, for example.

Further, in the lamination step of the present embodiment, all of the electrical steel sheets configuring the laminated core are laminated at once. If it is designed as above, a manufacturing man-hour of the lamination step and the adhesion step can be reduced. However, in the lamination step, a plurality of electrical steel sheets whose number is smaller than the number of electrical steel sheets configuring the laminated core, may also be laminated at once. For example, when there is a possibility that all of the electrical steel sheets configuring the laminated core cannot be securely adhered at once in the adhesion step, a plurality of electrical steel sheets whose number is smaller than the number of electrical steel sheets configuring the laminated core, may also be laminated at once. For example, in at least one of a case where the number of electrical steel sheets to be laminated is large and a case where a thickness of the electrical steel sheets to be laminated is thick, a plurality of electrical steel sheets whose number is smaller than the number of electrical steel sheets configuring the laminated core, may also be laminated at once.

Note that previous to the lamination, a plurality of electrical steel sheets are preferably subjected to a cutting process so that a planar shape thereof (a sheet surface shape) becomes a planar shape of the laminated core. The cutting is only required to be performed by a publicly-known method such as punching using a die, or cutting using a laser beam. However, the cutting of the electrical steel sheets as above does not always have to be performed before the lamination step. For example, the cutting of the electrical steel sheets may also be performed after the adhesion step. Further, the cutting of the electrical steel sheets may also be performed between the lamination step and the adhesion step. In this case, the cutting of the electrical steel sheets may also be performed right after the lamination of the plurality of electrical steel sheets, for example.

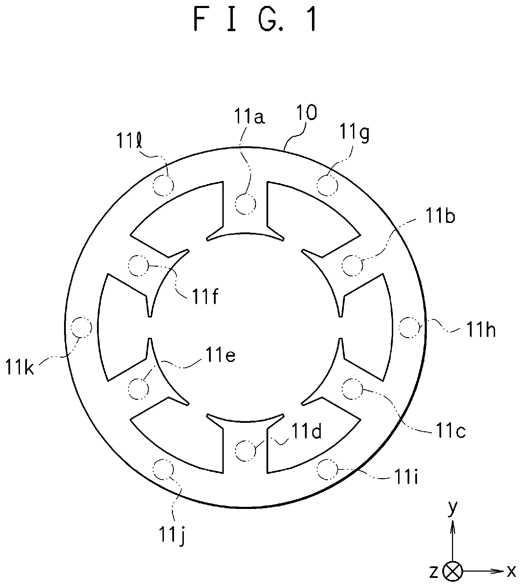

Fig. 1 is a view illustrating one example of a planar shape of an electrical steel sheet. Fig. 1 exemplifies a case where an electrical steel sheet 10 is an electrical steel sheet configuring a stator core of a radial gap-type rotary electric machine. Note that as described above, the laminated core is not limited to the stator core of the rotary electric machine.

### (Adhesion step)

In the adhesion step of the present embodiment, the plurality of electrical steel sheets laminated by the lamination step are adhered by making the adhesive ability of the adherable insulating coatings to be exhibited. Note that as long as the adhesion step is performed after laminating the plurality of electrical steel sheets by the lamination step, a place where the lamination step is performed and a place where the adhesion step is performed may be the same place or different places. Further, in the adhesion step of the present embodiment, a heating part is brought into contact with a partial region of a sheet surface of an outermost electrical steel sheet, to thereby simultaneously pressurize and heat the region. Note that the partial region of the sheet surface of the electrical steel sheet corresponds to a region of the sheet surface of the electrical steel sheet having an area smaller than an entire area of the sheet surface of the electrical steel sheet. The outermost electrical steel sheet corresponds to an electrical steel sheet positioned at one end or both ends in the lamination direction, out of the plurality of electrical steel sheets laminated at once by the lamination step. When a partial region of the sheet surface of the outermost electrical steel sheet is simultaneously pressurized and heated, the adhesive ability of the adherable insulating coating is exhibited at the partial region. Further, when the number of laminated electrical steel sheets is three or more, a partial region of the outermost electrical steel sheet is pressurized and heated, and at the same time, partial regions of the electrical steel sheets other than the outermost electrical steel sheet are also pressurized and heated. In this case, the adherable insulating coatings formed on the sheet surfaces of the electrical steel sheets other than the outermost electrical steel sheet also exhibit the adhesive ability at the partial regions. Therefore, the outermost electrical steel sheet and the electrical steel sheet adjacent to the outermost electrical steel sheet in the lamination direction are adhered, and in addition to that, the electrical steel sheets other than the outermost electrical steel sheet are also adhered to each other. In other words, all of the plurality of electrical steel sheets laminated by the lamination step are adhered at once to the electrical steel sheets adjacent in the lamination direction. At this time, the adhesive ability of the adherable insulating coatings is exhibited only at the partial regions of the sheet surfaces of the electrical steel sheets, so that the electrical steel sheets are partially adhered to each other at the partial regions. Note that since only the partial region of the adherable insulating coating exhibits the adhesive ability, even if the adherable insulating coating is formed on the entire sheet surface of the electrical steel sheet, the electrical steel sheets can be adhered to each other only at the partial regions. Therefore, in the adhesion step of the present embodiment, the plurality of electrical steel sheets can be pressurized and heated to be adhered to each other at once, and thus when manufacturing the laminated core, it is possible to efficiently perform the adhesion of mutual electrical steel sheets. Further, by making the heating part to be brought into contact with a partial region of the sheet surface of the outermost electrical steel sheet, it is possible to reduce the compressive stress that is applied to the electrical steel sheet (to 0 (zero), preferably), when compared to a case where the heating part is brought into contact with the entire sheet surface of the outermost electrical steel sheet (the entire sheet surface of the outermost electrical steel sheet is pressurized).

Further, in the adhesion step, the number of region with which the heating part is brought into contact at one sheet surface of the outermost electrical steel sheet may also be one. However, in such a case, depending on the size, the shape, and the like of the sheet surface of the electrical steel sheet, there is a possibility that the adhesion (fixing) of the electrical steel sheets cannot be securely performed unless the region with which the heating part is brought into contact is enlarged at one sheet surface of the outermost electrical steel sheet. If the region with which the heating part is brought into contact is enlarged at one sheet surface of the outermost electrical steel sheet, the compressive stress that is applied to the electrical steel sheet may be increased. Accordingly, in the adhesion step of the present embodiment, the heating part is brought into contact with a plurality of regions at one sheet surface of the outermost soft magnetic material sheet. In this case, two or more of regions out of these plurality of regions are set to be at positions separated from each other. Therefore, it is possible to realize both a reduction in the compressive stress that is applied to the electrical steel sheets by making the sheet surfaces of the electrical steel sheets partially adhere to each other, and a reduction in risk that the adhesion (fixing) of the electrical steel sheets becomes insufficient by making the sheet surfaces of the electrical steel sheets partially adhere to each other.

Note that the present embodiment exemplifies a case where all of a plurality of regions with which the heating part is brought into contact are at positions separated from each other, at one sheet surface of the outermost electrical steel sheet. However, at one sheet surface of the outermost electrical steel sheet, two or more of regions that are not separated from each other may also be included in the plurality of regions with which the heating part is brought into contact.

Further, in the adhesion step, it is also possible that the heating part is brought into contact, in order, with every region out of the plurality of regions at one sheet surface of the outermost electrical steel sheet. However, in such a case, it is not possible to sufficiently reduce the manufacturing man-hour of the adhesion step. Accordingly, in the adhesion step of the present embodiment, a plurality of heating parts are simultaneously brought into contact with a plurality of regions at one sheet surface of the outermost electrical steel sheet. Accordingly, the simultaneous pressurization and heating of the region is simultaneously performed at the plurality of regions. Therefore, it is possible to further reduce the manufacturing man-hour of the adhesion step. Note that the present embodiment exemplifies a case where the heating parts are simultaneously brought into contact with all of regions to be brought into contact with the heating parts, of the region of one sheet surface of the outermost electrical steel sheet. This makes it possible to further reduce the manufacturing man-hour of the adhesion step.

Further, when the heating part is brought into contact with a partial region of the sheet surface of the outermost electrical steel sheet, the plurality of electrical steel sheets may be moved in a direction of the heating part. However, it is easier to move the heating part than to move the plurality of electrical steel sheets. This is because there is a need to move the plurality of electrical steel sheets in a state where they are laminated by the lamination step. Accordingly, in the adhesion step of the present embodiment, the heating part is moved in a direction of the electrical steel sheets, to thereby make the heating part to be brought into contact with a partial region of the sheet surface of the outermost electrical steel sheet. In this case, the plurality of electrical steel sheets may also be moved in the direction of the heating part. If it is designed as above, it is possible to reduce a movement amount of the plurality of electrical steel sheets when compared to a case where the heating part is not moved and the plurality of electrical steel sheets are moved in the direction of the heating part, and thus the possibility of changing the state of the plurality of electrical steel sheets from the state where they are laminated by the lamination step, can be reduced. However, in order to further reduce the possibility of changing the state of the plurality of electrical steel sheets from the state where they are laminated by the lamination step, it is preferable that the plurality of electrical steel sheets are not moved in the direction of the heating part when the heating part is brought into contact with a partial region of the sheet surface of the outermost electrical steel sheet. If it is designed as above, the possibility of changing the state of the plurality of electrical steel sheets from the state where they are laminated by the lamination step can be further reduced, and besides, the means of moving the plurality of electrical steel sheets becomes unnecessary.

Further, the number of electrical steel sheets to be adhered by the one time of pressurization and heating in the adhesion step, is only required to be two or more. However, from a viewpoint of reducing the manufacturing man-hour of the lamination step and the adhesion step, the number of electrical steel sheets to be adhered by the one time of pressurization and heating in the adhesion step (the number of electrical steel sheet to be adhered at once) is preferably three or more, more preferably 0.1 times or more the total number of the electrical steel sheets configuring the laminated core, still more preferably 0.5 times or more the total number of the electrical steel sheets configuring the laminated core, and most preferably the total number of the electrical steel sheets configuring the laminated core.

The present embodiment exemplifies a case where the number of electrical steel sheets to be adhered by the one time of pressurization and heating becomes the same as the number of electrical steel sheets to be laminated at once in the lamination step. Further, in the lamination step of the present embodiment, all of the electrical steel sheets configuring the laminated core are laminated at once. Therefore, in the adhesion step of the present embodiment, all of the electrical steel sheets configuring the laminated core are adhered at once by the one time of pressurization and heating. However, as explained in the section of (lamination step), when there is a possibility that the plurality of electrical steel sheets cannot be securely adhered, for example, a plurality of electrical steel sheets whose number is smaller than the number of electrical steel sheets configuring the laminated core, may also be laminated at once. In this case, the plurality of electrical steel sheets whose number is smaller than the number of electrical steel sheets configuring the laminated core, are laminated at once by the one time of pressurization and heating. Note that the respective electrical steel sheets to be pressurized and heated at once are preferably adhered at the same positions of the sheet surfaces, respectively.

Further, it is also possible that different processing with respect to the electrical steel sheets is performed simultaneously with the pressurization and heating in the adhesion step. However, if the electrical steel sheets are cut simultaneously with the pressurization and heating in the adhesion step, for example, the possibility that the plurality of electrical steel sheets cannot be securely adhered increases. Therefore, in the adhesion step of the present embodiment, the different processing with respect to the electrical steel sheets is not performed simultaneously with the pressurization and heating of the partial region of the sheet surface of the outermost electrical steel sheet. The different processing includes, for example, cutting of the electrical steel sheets. As described above, the present embodiment exemplifies a case where the adhesion step is a dedicated step for making the plurality of electrical steel sheets to be adhered.

Note that depending on the size, the shape, and the like of the laminated core, for example, there is a case where the possibility that the plurality of electrical steel sheets cannot be securely adhered is low even if the electrical steel sheets are cut simultaneously with the pressurization and heating in the adhesion step. In this case, for example, the electrical steel sheets may also be cut simultaneously with the pressurization and heating in the adhesion step. In this case, a die may also play a role as the heating part (the die may also have the heating part, for example). When the heating part is moved in the direction of the plurality of electrical steel sheets as in the present embodiment, the heating part plays a role as a punch, and does not play a role as a die. Note that when the electrical steel sheets are not cut simultaneously with the pressurization and heating in the adhesion step, the heating part does not play a role as the die.

### (Manufacturing apparatus of laminated core)

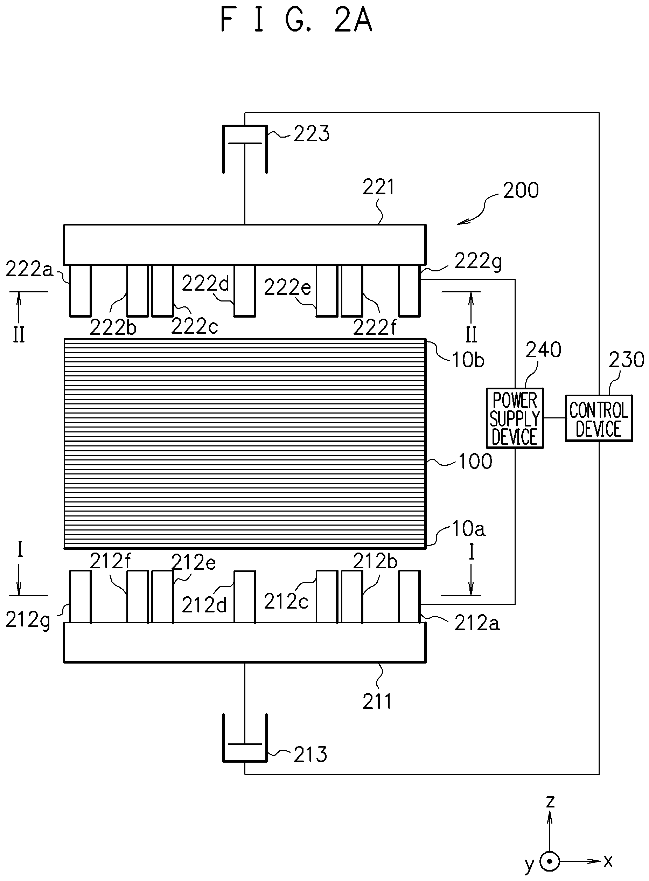

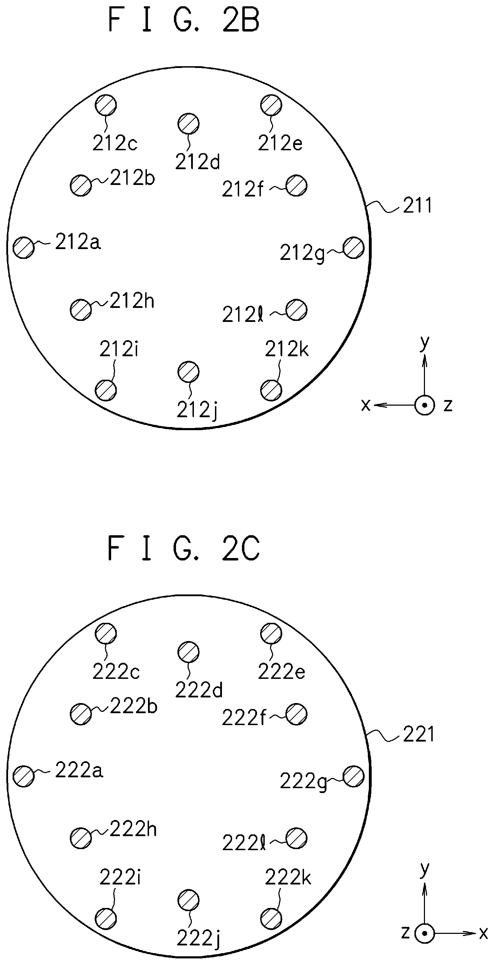

Fig. 2A to Fig. 2C are views each illustrating one example of a manufacturing apparatus of a laminated core used in the adhesion step of the present embodiment. Note that the modified examples explained in the section of (lamination step) and the section of (adhesion step) may also be adopted for the manufacturing apparatus of the laminated core. Fig. 2A illustrates one example of an entire configuration of the manufacturing apparatus of the laminated core. Fig. 2B is a sectional view taken along I-I in Fig. 2A. Fig. 2C is a sectional view taken along II-II in Fig. 2A. Note that the present embodiment exemplifies a case where the electrical steel sheet configuring the laminated core is the electrical steel sheet 10 illustrated in Fig. 1. Further, the present embodiment exemplifies a case where a plurality of electrical steel sheets 10 are adhered to each other.

In Fig. 2A, an electrical steel sheet group 100 is obtained by laminating a plurality of electrical steel sheets 10. Note that in Fig. 2A, the lamination direction is a z-axis direction. Further, the plurality of electrical steel sheets 10 are laminated so that their contours are matched to each other. Further, in a state illustrated in Fig. 2A, the plurality of electrical steel sheets 10 are not heated to a temperature equal to or more than a temperature at which the adhesive ability of the adherable insulating coatings formed on sheet surfaces of the plurality of electrical steel sheets 10 is exhibited. Specifically, in the state illustrated in Fig. 2A, the adhesive ability of the adherable insulating coatings is not exhibited.

As illustrated in Fig. 2A, the present embodiment exemplifies a case where the manufacturing apparatus of the laminated core has a heating and pressurizing device 200, a control device 230, and a power supply device 240. Further, the present embodiment exemplifies a case where the heating and pressurizing device 200 has holding parts 211, 221, heating parts 212a to 212l, 222a to 222l, and driving parts 213, 223.

The holding parts 211, 221 hold the heating parts 212a to 212l, 222a to 222l, respectively, so as to prevent positions of the heating parts from being displaced. Fig. 2A to Fig. 2C exemplify a case where the holding parts 211, 221 have the same configuration. Concretely, Fig. 2A to Fig. 2C exemplify a case where a shape of the holding parts 211, 221 is a columnar shape. The holding parts 211, 221 may also be in a state of electrically insulated or in a state of not electrically insulated from the heating parts 212a to 212l, 222a to 222l, respectively. Further, the holding parts 211, 221 may also be in a state of not magnetically coupled or in a state of magnetically coupled to the heating parts 212a to 212l, 222a to 222l, respectively.

The heating parts 212a to 212l, 222a to 222l are respectively brought into contact with partial regions of one sheet surface of the electrical steel sheet 10. Since the heating parts 212a to 212l, 222a to 222l in a heated state are respectively brought into contact with the partial regions of one sheet surface of the electrical steel sheet 10, the regions are simultaneously pressurized and heated. Fig. 2A to Fig. 2C exemplify a case where the heating parts 212a to 212l, 222a to 222l have the same configuration. Concretely, Fig. 2A to Fig. 2C exemplify a case where a shape of each of the heating parts 212a to 212l, 222a to 222l is of a column whose surface facing outermost electrical steel sheets 10a, 10b is not opened.

Further, the present embodiment exemplifies a case where the heating parts 212a to 212l, 222a to 222l respectively have heating elements. When the heating elements generate heat, a temperature of the surfaces of the heating parts 212a to 212l, 222a to 222l is increased. The heating element may also be formed of a metal material, or a non-metal material. The present embodiment exemplifies a case where the heating element generates heat through resistance heating. However, the heating element does not always have to generate heat through the resistance heating. For example, the heating element may also be subjected to induction heating by a magnetic field generated from a coil arranged around the heating element. Note that main bodies of the heating parts 212a to 212l, 222a to 222l may also be heating elements, for example. Further, for example, heating elements may also be provided to regions of surfaces of the main bodies of the heating parts 212a to 2121, 222a to 222l, different from the regions that are brought into contact with the partial regions of one sheet surface of the electrical steel sheet 10. Further, the heating parts 212a to 212l, 222a to 222l may not have the heating elements. This will be described later.

As described above, the heating parts 212a to 212l, 222a to 222l are respectively brought into contact with the partial regions of one sheet surface of the electrical steel sheet 10. The present embodiment exemplifies a case where the heating parts 212a to 212l are brought into contact with partial regions of a sheet surface (a sheet surface on a z-axis negative direction side) of the electrical steel sheet 10a positioned at one end in the lamination direction (an end on the z-axis negative direction side), out of the electrical steel sheets 10 configuring the electrical steel sheet group 100. Further, the present embodiment exemplifies a case where the heating parts 222a to 222l are respectively brought into contact with partial regions of a sheet surface (a sheet surface on a z-axis positive direction side) of the electrical steel sheet 10b positioned at the other end in the lamination direction (an end on the z-axis positive direction side), out of the electrical steel sheets 10 configuring the electrical steel sheet group 100. The electrical steel sheet 10a positioned at one end in the lamination direction (the end on the z-axis negative direction side), out of the electrical steel sheets 10 configuring the electrical steel sheet group 100, is one example of the outermost electrical steel sheet. Therefore, in the explanation below, the electrical steel sheet 10a positioned at one end in the lamination direction (the end on the z-axis negative direction side), will be referred to as the outermost electrical steel sheet 10a, according to need. Further, the electrical steel sheet 10b positioned at the other end in the lamination direction (the end on the z-axis positive direction side), out of the electrical steel sheets 10 configuring the electrical steel sheet group 100, is also one example of the outermost electrical steel sheet. Therefore, in the explanation below, the electrical steel sheet 10b positioned at the other end in the lamination direction (the end on the z-axis positive direction side), will be referred to as the outermost electrical steel sheet 10b, according to need.

Further, in the explanation below, a region of each of the heating parts 212a to 212l, 222a to 222l that is brought into contact with the partial region of one sheet surface of the electrical steel sheet 10, will be referred to as a contact region, according to need. The present embodiment exemplifies a case where the contact region of each of the heating parts 212a to 212l, 222a to 222l is a surface. Specifically, the present embodiment exemplifies a case where each of the heating parts 212a to 212l, 222a to 222l is brought into surface contact with the partial region of one sheet surface of the electrical steel sheet 10. In such a case, even if the number of contact regions is not increased, it is possible to reduce the risk that the adhesion (fixing) of the electrical steel sheets 10 becomes insufficient. However, each of the heating parts 212a to 212l, 222a to 222l may also be brought into point contact with the partial region of one sheet surface of the electrical steel sheet 10. Further, the present embodiment exemplifies a case where distances (in the z-axis direction) from the holding parts 211, 221 to the contact regions of the heating parts 212a to 212l, 222a to 222l are respectively the same. Therefore, in the present embodiment, the contact regions of the heating parts 212a to 212l, and the contact regions of the heating parts 222a to 222l are simultaneously brought into contact with the partial regions of the sheet surface of the outermost electrical steel sheet 10a, and the partial regions of the sheet surface of the outermost electrical steel sheet 10b, respectively.

The heating parts 212a to 212l, 222a to 222l (the above-described heating elements) generate heat so that the temperature of the contact regions of the heating parts 212a to 212l, 222a to 222l of the present embodiment becomes a temperature equal to or more than the temperature at which the adhesive ability of the adherable insulating coatings is exhibited. Here, out of the regions of the heating parts 212a to 212l, 222a to 222l, at least the contact regions of the heating parts 212a to 212l, 222a to 222l are preferably formed of a material containing no metal ion. The adherable insulating coating does exhibit the adhesive ability with respect to the material containing no metal ion (ceramics, and the like). Accordingly, the electrical steel sheet 10 is not adhered to the heating parts 212a to 212l, 222a to 222l. Note that all of regions of the heating parts 212a to 212l, 222a to 222l may also be formed of the material containing no metal ion. Further, the holding parts 211, 221, and the heating parts 212a to 212l, 222a to 222l are configured so as to prevent a reduction in mechanical strength (prevent deformation) due to the heat generation of the heating parts 212a to 212l, 222a to 222l, and the contact with the electrical steel sheet 10.

Fig. 2A to Fig. 2C exemplify a case where the contact regions of the heating parts 212a to 212l, 222a to 222l are brought into contact with planned heating regions 11a to 11l surrounded by a two-dot chain line given to the sheet surface of the electrical steel sheet 10 in Fig. 1. Note that the two-dot chain line illustrated in Fig. 1 is a virtual line. If a total area of the planned heating regions 11a to 11l (the sum of areas of the individual planned heating regions 11a to 11l) is excessively large, the compressive stress that is applied to the electrical steel sheet 10 may be increased. On the other hand, if the total area of the planned heating regions 11a to 11l is excessively small, the adhesion (fixing) of the electrical steel sheets 10 may become insufficient. Further, also when positions of the planned heating regions 11a to 11l are biased, the adhesion (fixing) of the electrical steel sheets 10 may become insufficient. The number, the position, and the size of the planned heating regions 11a to 11l are previously determined based on the above viewpoints.

For example, previous to mass production of the laminated core, a plurality of prototypes differed in at least one of the number, the position, the shape, and the size of the contact regions of the heating parts, are produced as prototypes of the heating and pressurizing device 200. The number, the position, the shape, and the size of the contact regions of the heating parts correspond to the number, the position, the shape, and the size of the planned heating regions of the electrical steel sheet 10. By using the plurality of prototypes of the heating and pressurizing device 200, a plurality of prototypes of the laminated core are manufactured. Core losses of the plurality of prototypes of the laminated core manufactured as above are measured. Further, the presence/absence of peeling of the electrical steel sheets in the plurality of prototypes of the laminated core is checked. The prototype of the laminated core in which the core loss is equal to or less than the core loss required of the laminated core, and no peeling of the electrical steel sheet occurs, is specified. The number, the position, the shape, and the size of the contact regions of the heating parts used for manufacturing the specified prototype of the laminated core, are adopted as the number, the position, the shape, and the size of the contact regions of the heating parts 212a to 212l, 222a to 222l of the heating and pressurizing device 200. As described above, the number, the position, the shape, and the size of the contact regions of the heating parts 212a to 212l, 222a to 222l may also be determined by trial and error. Therefore, the number, the position, the shape, and the size of the contact regions of the heating parts 212a to 212l, 222a to 222l of the heating and pressurizing device 200 are not limited to those illustrated in Fig. 2A to Fig. 2C.

From a viewpoint of realizing both the reduction in the compressive stress that is applied to the electrical steel sheets, and the reduction in risk that the adhesion (fixing) of the electrical steel sheets becomes insufficient, the contact regions of the heating parts that are brought into contact with one sheet surface of the electrical steel sheet 10, are preferably designed as follows. First, a preferable example of the number of contact regions of the heating parts that are brought into contact with one sheet surface of the electrical steel sheet 10 when the laminated core is used as a stator core and rotor core, will be explained. When the laminated core is a stator core, the number of teeth of the stator core is set to Nt. When the laminated core is a rotor core, the number of teeth of a stator core to be paired with the rotor core is set to Nt. The number of contact regions of the heating parts to be brought into contact with one sheet surface of the electrical steel sheet 10 may also be set to, for example, 0.3 × Nt or more and 6.0 × Nt or less, it is preferably set to 0.4 × Nt or more and 4.0 × Nt or less, and it is more preferably set to 0.5 × Nt or more and 2.0 × Nt or less. Fig. 1 exemplifies a case where the number Nt of the teeth of the stator core is six. Further, Fig. 2A to Fig. 2C exemplify a case where the number of heating parts 212a to 212l, and the number of heating parts 222a to 222l, are twelve, respectively. Therefore, the present embodiment exemplifies a case where each of the number of contact regions of the heating parts 212a to 212l, and the number of contact regions of the heating parts 222a to 222l to be brought into contact with one sheet surface of the electrical steel sheets 10a, 10b, respectively, is 2.0 × Nt.

Further, the number of contact regions of the heating parts may also be set to, for example, three or more or four or more, and further, it may also be set to six or more or twelve or more. A ratio of a total area of the contact regions of the heating parts at one sheet surface of the electrical steel sheet 10 to an area of the one sheet surface is preferably set to 5% or more and 70% or less, and more preferably set to 10% or more and 50% or less, for example. For example, it is also possible to design such that at least one contact region of the heating part exists in each of a plurality of divided regions obtained by dividing a region of one sheet surface of the electrical steel sheet 10 into two or more and twenty or less, or three or more and twenty or less so that each region has the same area.

As described above, the number, the position, the shape, and the size of the planned heating regions of the electrical steel sheet 10 are determined in accordance with the number, the position, the shape, and the size of the contact regions of the heating parts. Fig. 1 exemplifies the planned heating regions 11a to 11l that are determined in accordance with the heating parts 212a to 212l, 222a to 222l illustrated in Fig. 2A to Fig. 2C. Specifically, a case is exemplified in which the contact regions of the heating parts 212a to 212l are brought into contact with the planned heating regions 11a to 11l. Note that when a view is supposed in which the sheet surface of the electrical steel sheet 10 illustrated in Fig. 1 is seen from the z-axis positive direction side (when it is supposed that the direction of z-axis of x-y-z coordinates is an opposite direction to the direction illustrated in Fig. 1), the contact regions of the heating parts 222a to 222l are also brought into contact with the planned heating regions 11a to 11l.

The adhesive ability of the adherable insulating coating is exhibited at a partial region of the region of one sheet surface of the electrical steel sheet 10, and is not exhibited at the other region of the region of the sheet surface. In the example illustrated in Fig. 1, the adhesive ability of the adherable insulating coating is exhibited at the planned heating regions 11a to 11l of the region of one sheet surface of the electrical steel sheet 10, and is not exhibited at the other region of the sheet surface, for example. The two or more regions out of the regions at which the adhesive ability of the adherable insulating coating is exhibited, are at positions separated from each other. Note that the planned heating regions 11a to 11l, and the regions at which the adhesive ability of the adherable insulating coating is exhibited, may be matched or may not be matched. For example, the adhesive ability of the adherable insulating coating may also be exhibited at a region wider than the planned heating regions 11a to 11l. Conversely, the adhesive ability of the adherable insulating coating may also be exhibited at a region narrower than the planned heating regions 11a to 11l. However, at one sheet surface of the electrical steel sheet 10, the number of regions at which the adhesive ability of the adherable insulating coating is exhibited and the number of planned heating regions 11a to 11l, are preferably the same. Note that the number of regions at positions separated from each other, out of the regions at which the adhesive ability of the adherable insulating coating is exhibited, is counted as the number of regions at which the adhesive ability of the adherable insulating coating is exhibited. Specifically, the respective regions at which the adhesive ability of the adherable insulating coating is exhibited, are a series of regions.

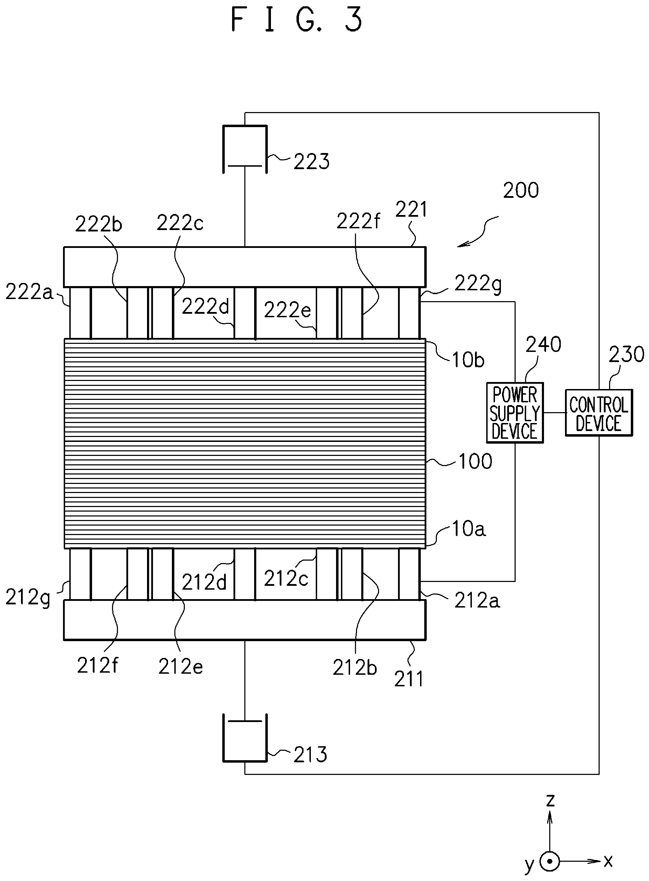

To the holding parts 211, 221, the driving parts 213, 223 are respectively attached. The driving part 213 makes the holding part 211 and the heating parts 212a to 212l move in the lamination direction (z-axis direction), to thereby make the contact regions of the heating parts 212a to 212l to be brought into contact with the partial regions (the planned heating regions 11a to 11l) of the sheet surface of the outermost electrical steel sheet 10a. The driving part 223 makes the holding part 221 and the heating parts 222a to 222l move in the lamination direction, to thereby make the contact regions of the heating parts 222a to 222l to be brought into contact with the partial regions of the sheet surface of the outermost electrical steel sheet 10b. Fig. 3 is a view illustrating one example of an entire configuration of the manufacturing apparatus of the laminated core in a state where the heating parts 212a to 212l, 222a to 222l are brought into contact with the partial regions of the sheet surfaces of the outermost electrical steel sheets 10a, 10b, respectively, in the manner as above. The present embodiment exemplifies a case where a state of the heating and pressurizing device 200 includes a state illustrated in Fig. 2A and a state illustrated in Fig. 3.

The driving parts 213, 223 have hydraulic cylinders, for example. When the pressure applied to the electrical steel sheet group 100 by the contact of the heating parts 212a to 212l, 222a to 222l with respect to the partial regions of the sheet surfaces of the outermost electrical steel sheets 10a, 10b, respectively, is excessively small, the adhesion (fixing) of the electrical steel sheets 10 may become insufficient. On the contrary, when that pressure is excessively large, the positions in the sheet surface direction (an x-y plane direction in Fig. 1 to Fig. 3) of the electrical steel sheets 10 configuring the electrical steel sheet group 100 may be displaced greatly. In the explanation below, that pressure will be referred to as a pressure to be applied to the electrical steel sheet group 100, according to need. Further, when a surface temperature of the adherable insulating coating is excessively low, the adhesive ability of the adherable insulating coating may not be exhibited, or the adhesion (fixing) of the electrical steel sheets 10 may become insufficient. Further, the man-hour in the contact step may be increased. On the contrary, when the surface temperature of the adherable insulating coating is excessively high, the temperature of the electrical steel sheet 10 may exceed a heat-resistant temperature of the adherable insulating coating, or the adhesion (fixing) of the electrical steel sheets 10 may become insufficient. The surface temperature of the adherable insulating coating may also be obtained by performing actual measurement of a temperature of a predetermined region of the surface of the adherable insulating coating, for example. The predetermined region may also be set to a region as close as possible to the planned heating regions 11a to 11l, of the region of the surface of the adherable insulating coating, for example. Further, the surface temperature of the adherable insulating coating may also be a calculated value.

The pressure to be applied to the electrical steel sheet group 100, and the surface temperature of the adherable insulating coating are previously determined from the above-described viewpoints. For example, previous to the mass production of the laminated core, a plurality of prototypes are manufactured as prototypes of the laminated core, under conditions differed in at least one of the pressure to be applied to the electrical steel sheet group 100 and the surface temperature of the adherable insulating coating. Positions in the sheet surface direction of the electrical steel sheets in the plurality of prototypes of the laminated core are checked. Further, the presence/absence of peeling of the electrical steel sheets in the plurality of prototypes of the laminated core is checked. The prototype of the laminated core in which the positional displacement in the sheet surface direction of the electrical steel sheet is equal to or less than the displacement amount required of the laminated core, and no peeling of the electrical steel sheet occurs, is specified. The manufacturing condition (the pressure to be applied to the electrical steel sheet group 100 and the surface temperature of the adherable insulating coating) when manufacturing the specified prototype of the laminated core, is adopted as an actual manufacturing condition. Note that when the actual manufacturing condition is determined as above, a period of time during which the heating parts 212a to 2121, 222a to 2221 are brought into contact with the partial regions of the sheet surfaces of the outermost electrical steel sheets 10a, 10b, may also be set to a given period of time (fixed value). Note that it is also possible that the above-described period of time may be differed in addition to or in place of the pressure to be applied to the electrical steel sheet group 100 and the surface temperature of the adherable insulating coating.

From a viewpoint of realizing both the reduction in risk that the adhesion (fixing) of the electrical steel sheets becomes insufficient, and the reduction in risk that the positions in the sheet surface direction of the electrical steel sheets 10 configuring the electrical steel sheet group 100 are displaced greatly, the pressure to be applied to the electrical steel sheet group 100 is preferably set to 0.5 MPa or more and 70 MPa or less, and more preferably set to 3 MPa or more and 30 MPa or less, for example. From a viewpoint of realizing both the reduction in risk that the adhesion (fixing) of the electrical steel sheets becomes insufficient, and the reduction in man-hour of the adhesion step, the surface temperature of the adherable insulating coating is preferably set to 100°C or more and 300°C or less, and more preferably set to 150°C or more and 250°C or less, for example.

The power supply device 240 supplies electric power to the heating parts 212a to 2121, 222a to 2221. The magnitude of the electric power is previously determined so that the surface temperature of the adherable insulating coating becomes equal to or more than the temperature at which the adhesive ability of the adherable insulating coating is exhibited, for example. Note that the preferable range of the surface temperature of the adherable insulating coating is as described above. Further, in Fig. 2A and Fig. 3, only lines connecting the power supply device 240 and the heating parts 212a, 222g are illustrated, for the convenience of notation. However, the power supply device 240 is electrically connected to the heating parts 212a to 2121, 222a to 2221 so that it can collectively or individually supply electric power to the heating parts 212a to 2121, 222a to 2221, respectively. As described above, the present embodiment exemplifies a case where the heating elements provided to the heating parts 212a to 2121, 222a to 2221 generate heat through resistance heating. In this case, the power supply device 240 is electrically connected to the heating elements, and it makes an alternating current or a direct current flow through the heating elements.

The control device 230 controls operations of the driving parts 213, 223, and the power supply device 240. The hardware of the control device 230 has one or more of hardware processors such as a CPU (Central Processing Unit), for example. Further, the hardware of the control device 230 has one or more of memories such as a RAM (Random Access Memory) and a ROM (Read Only Memory). The control device 230 executes various kinds of arithmetic operation by executing one or more of programs stored in the memory, by using the one or more of hardware processors. Besides, the hardware of the control device 230 has an input device and an output device. Further, the control device 230 may also be realized by the dedicated hardware such as an ASIC (Application Specific Integrated Circuit), or it may also be realized by a PLC (Programmable Logic Controller).

Here, an example of processing by the control device 230 will be explained by exemplifying a case in which initial positions of the holding parts 211, 221, and the heating parts 212a to 2121, 222a to 2221 are the positions illustrated in Fig. 2A.

For example, an operator operates the input device of the control device 230, to thereby issue a work start instruction to the control device 230. Based on the work start instruction, the control device 230 outputs a contact instruction signal to the driving parts 213, 223. Based on the contact instruction signal, the driving parts 213, 223 make the holding parts 211, 221 and the heating parts 212a to 2121, 222a to 2221 at the initial positions move in the direction of the electrical steel sheet group 100. The movement of the holding parts 211, 221, and the heating parts 212a to 2121, 222a to 2221 is performed until when a state in which a predetermined pressure is applied to the electrical steel sheet group 100 by the heating parts 212a to 2121, 222a to 2221, is created. The predetermined pressure is the above-described pressure to be applied to the electrical steel sheet group 100. In a manner as above, the state illustrated in Fig. 2A turns into the state illustrated in Fig. 3. Whether or not the predetermined pressure is applied to the electrical steel sheet group 100, is determined based on a measured value or a calculated value of the pressure applied to the electrical steel sheet group 100, or a measured value or a calculated value of a physical quantity capable of being converted into the pressure (for example, a measured value or a calculated value of a hydraulic pressure in the hydraulic cylinder), for example.

When there is created the state where the predetermined pressure is applied to the electrical steel sheet group 100, the control device 230 outputs an electric power supply instruction signal to the power supply device 240. Based on the electric power supply instruction signal, the power supply device 240 supplies electric power to the heating parts 212a to 2121, 222a to 2221. After an elapse of a predetermined period of time from the start of the supply of electric power to the heating parts 212a to 2121, 222a to 2221, the control device 230 outputs an electric power stop instruction signal to the power supply device 240. The predetermined period of time is, for example, the above-described given period of time (fixed value).

Based on the electric power supply stop signal, the power supply device 240 stops the supply of electric power to the heating parts 212a to 2121, 222a to 2221. Further, the control device 230 outputs a standby instruction signal to the driving parts 213, 223. Based on the standby instruction signal, the driving parts 213, 223 make the holding parts 211, 221 and the heating parts 212a to 2121, 222a to 2221 move and return to their initial positions. In a manner as above, the holding parts 211, 221, and the heating parts 212a to 2121, 222a to 2221 turn into the state illustrated in Fig. 2A from the state illustrated in Fig. 3.

As described above, in the present embodiment, the heating processing means is realized by using the control device 230 and the power supply device 240, for example. Further, in the present embodiment, the pressurization processing means is realized by using the holding parts 211, 221, the driving units 213, 223, and the control device 230, for example.

Note that here, the case was exemplified in which the operations of the holding parts 211, 221, and the heating parts 212a to 2121, 222a to 2221 are automatically performed by the control device 230 in the adhesion step. However, it does not always have to be designed as above. For example, the operations of the holding parts 211, 221, and the heating parts 212a to 2121, 222a to 2221 may also be manually performed by the operator. Further, the operator may also turn on or off the power supply in the power supply device 240. Further, the power supply in the power supply device 240 may also be turned on before the heating parts 212a to 2121, 222a to 2221 are brought into contact with the planned heating regions 11a to 111 of the electrical steel sheets 10a, 10b. For example, before there is created a state where the predetermined pressure is applied to the electrical steel sheet group 100, the electric power stop instruction signal may also be output to the power supply device 240. As described above, in the present embodiment, as long as the planned heating regions 11a to 11l of the electrical steel sheets 10a, 10b are simultaneously pressurized and heated in the adhesion step, the timing of starting the heating of the planned heating regions 11a to 11l of the electrical steel sheets 10a, 10b may also be before or after the contact of the plurality of heating parts 212a to 2121, 222a to 2221 with respect to the planned heating regions 11a to 111 of the electrical steel sheets 10a, 10b. Further, the heating of the planned heating regions 11a to 11l of the electrical steel sheets 10a, 10b may also be started simultaneously with the contact of the plurality of heating parts 212a to 2121, 222a to 2221 with respect to the planned heating regions 11a to 111 of the electrical steel sheets 10a, 10b.

Further, as described above, the case is exemplified in which all of the electrical steel sheets 10 configuring the laminated core are laminated at once in the lamination step of the present embodiment. In such a case, in the adhesion step, in a state where all of the electrical steel sheets 10 configuring the laminated core are laminated, the electrical steel sheets 10 are heated. However, as described above, when there is a possibility that all of the electrical steel sheets configuring the laminated core cannot be securely adhered at once in the adhesion step, a plurality of electrical steel sheets whose number is smaller than the number of electrical steel sheets configuring the laminated core, may also be laminated at once in the lamination step, for example. In such a case, each of the lamination step and the adhesion step is performed a plurality of times. Even in such a case, from a viewpoint of reducing the manufacturing man-hour of the lamination step and the adhesion step, the number of electrical steel sheets to be adhered in one time of the adhesion step, is preferably large. Note that when N (N ≥ 2) electrical steel sheet groups in each of which a plurality of electrical steel sheets 10 are laminated are adhered by one time of the adhesion step, (N - 1) × 2 electrical steel sheets 10 are adhered at once.

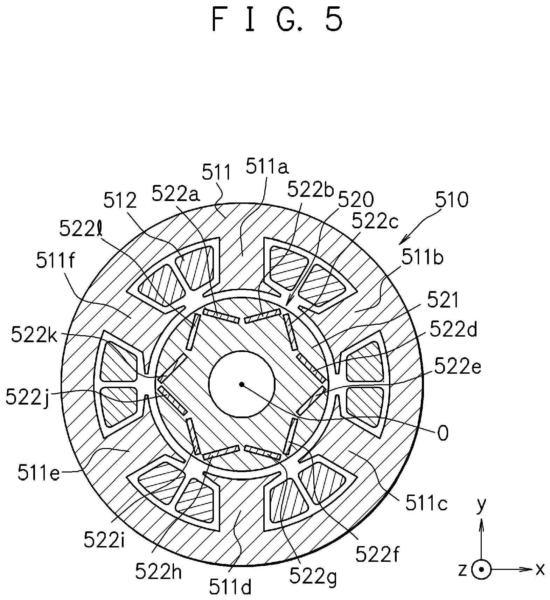

Fig. 5 is a view illustrating one example of a configuration of equipment having the laminated core manufactured by using the manufacturing method (and the manufacturing apparatus) of the laminated core of the present embodiment. Note that the equipment (laminated core) may also be manufactured by adopting the modified examples explained in the section of (lamination step), the section of (adhesion step), and the section of (manufacturing apparatus of laminated core). Fig. 5 exemplifies a case where the equipment is a rotary electric machine. Further, Fig. 5 illustrates a cross section of the rotary electric machine when the rotary electric machine is cut perpendicular to its center line 0. Note that a side view of the rotary electric machine corresponds to a region of the electrical steel sheet group 100 illustrated in Fig. 3, for example.

In Fig. 5, the rotary electric machine has a stator 510 and a rotor 520. The stator 510 has a stator core 511 and a stator coil 512. The rotor 520 has a rotor core 521 and permanent magnets 522a to 5221.

As described above, the number of contact regions of the heating parts to be brought into contact with one sheet surface of the electrical steel sheet 10 may also be set to, for example, 0.3 × Nt or more and 6.0 × Nt or less, it is preferably set to 0.4 × Nt or more and 4.0 × Nt or less, and it is more preferably set to 0.5 × Nt or more and 2.0 × Nt or less. When the laminated core manufactured by using the manufacturing method of the laminated core of the present embodiment is the stator core 511, Nt is the number of teeth of the stator core 511. When the laminated core manufactured by using the manufacturing method of the laminated core of the present embodiment is the rotor core 521, Nt is the number of teeth of the stator core 511 to be paired with the rotor core 521.

Further, as described above, the adhesive ability of the adherable insulating coating is exhibited at the partial region of one sheet surface of the electrical steel sheet 10. The number of regions at which the adhesive ability is exhibited at one sheet surface of the electrical steel sheet configuring the laminated core manufactured by using the manufacturing method of the laminated core of the present embodiment, is preferably the same as the number of contact regions of the heating parts to be brought into contact with one sheet surface of the electrical steel sheet 10. As described above, the number of regions at positions separated from each other, out of the regions at which the adhesive ability of the adherable insulating coating is exhibited, is counted as the number of regions at which the adhesive ability of the adherable insulating coating is exhibited. Further, in the laminated core of the present embodiment, the electrical steel sheets adjacent in the lamination direction are adhered to each other at the regions at which the adhesive ability of the adherable insulating coatings of the sheet surfaces of the electrical steel sheets is exhibited. Accordingly, the number of regions at which the adhesive ability is exhibited at one sheet surface of the electrical steel sheet configuring the laminated core, becomes the same as the number of regions at which the electrical steel sheet and the electrical steel sheet adjacent to that electrical steel sheet in the lamination direction are adhered. At one sheet surface of the electrical steel sheet configuring the laminated core manufactured by using the manufacturing method of the laminated core of the present embodiment, the number of regions adhered to the sheet surface of the soft magnetic material sheet adjacent in the lamination direction, may also be set to, for example, 0.3 × Nt or more and 6.0 × Nt or less, it is preferably set to 0.4 × Nt or more and 4.0 × Nt or less, and it is more preferably set to 0.5 × Nt or more and 2.0 × Nt or less.

Note that for example, in a process of collecting the electrical steel sheets from the laminated core and disassembling them into individual electrical steel sheets, the sheet surface of the disassembled electrical steel sheet is photographed and subjected to image analysis, or visual observation or the like is performed to discriminate the regions at which the electrical steel sheets are adhered, and in a manner as above, it is possible to check the number of regions at which the electrical steel sheets are adhered.

Both the stator core 511 and the rotor core 521 may also be the laminated cores manufactured by using the manufacturing method of the laminated core of the present embodiment. Out of the stator core 511 and the rotor core 521, only the stator core 511 may also be the laminated core manufactured by using the manufacturing method of the laminated core of the present embodiment. Out of the stator core 511 and the rotor core 521, only the rotor core 521 may also be the laminated core manufactured by using the manufacturing method of the laminated core of the present embodiment. When the laminated core manufactured by using the manufacturing method of the laminated core of the present embodiment is the stator core 511, for example, the matters explained in the section of (lamination step), the section of (adhesion step), and the section of (manufacturing apparatus of laminated core) are adopted to a plurality of electrical steel sheets whose planar shape is a shape with a contour line corresponding to the contour line of the stator core 511 illustrated in Fig. 5. Note that Fig. 5 exemplifies a case where the stator core 511 is manufactured by laminating the plurality of electrical steel sheets 10 having the planar shape illustrated in Fig. 1. Further, when the laminated core manufactured by using the manufacturing method of the laminated core of the present embodiment is the rotor core 521, for example, the matters explained in the section of (lamination step), the section of (adhesion step), and the section of (manufacturing apparatus of laminated core) are adopted to a plurality of electrical steel sheets whose planar shape is a shape with a contour line corresponding to the contour line of the rotor core 521 illustrated in Fig. 5.

Fig. 5 exemplifies a case where the stator core 511 has six teeth 511a to 511f. Therefore, Fig. 5 exemplifies a case where Nt is six. Note that as long as at least one of the stator core and the rotor core is manufactured by using the manufacturing method of the laminated core of the present embodiment, a configuration of an IPM motor is not limited to the configuration exemplified in Fig. 5. For example, a flux barrier may also be formed in the rotor core.

Further, Fig. 5 exemplifies a case where the rotary electric machine is the IPM (Interior Permanent Magnet) motor. However, the rotary electric machine is not limited to the IPM motor. For example, the rotary electric machine may also be a motor other than the IPM motor. Further, the rotary electric machine may also be a power generator.

### (Summary)

As described above, in the present embodiment, the plurality of electrical steel sheets 10 are laminated to produce the electrical steel sheet group 100. On the sheet surface of the electrical steel sheet 10, the insulating coating that exhibits the adhesive ability through heating (the adherable insulating coating) is formed. By making the heating parts 212a to 2121, 222a to 2221 to be brought into contact with the planned heating regions 11a to 11l of the outermost electrical steel sheets 10a, 10b of the electrical steel sheet group 100, the planned heating regions 11a to 11l are simultaneously pressurized and heated. Therefore, when manufacturing the laminated core, the adhesion of the mutual electrical steel sheets 10 can be efficiently performed. Further, when compared to a case where a timing at which the laminated plurality of electrical steel sheets 10 are pressurized and a timing at which the laminated plurality of electrical steel sheets 10 are heated are set to different timings, it is possible to reduce the possibility that the positions in the sheet surface direction (the x-y plane direction in Fig. 1 to Fig. 3) of the electrical steel sheets 10 are displaced. Further, since the heating parts 212a to 2121, 222a to 2221 perform the heating and pressurization, the apparatus can be downsized.

Further, in the present embodiment, the heating parts 212a to 2121, 222a to 2221 are brought into contact with the plurality of planned heating regions 11a to 11l of the outermost electrical steel sheets 10a, 10b, in the adhesion step. Therefore, it is possible to realize both the reduction in compressive stress that is applied to the electrical steel sheets 10 by making the sheet surfaces of the electrical steel sheets 10 partially adhere to each other, and the reduction in risk that the adhesion (fixing) of the electrical steel sheets 10 becomes insufficient by making the sheet surfaces of the electrical steel sheets 10 partially adhere to each other.

Further, in the present embodiment, the plurality of heating parts 212a to 2121, 222a to 2221 are simultaneously brought into contact with the plurality of planned heating regions 11a to 11l of the outermost electrical steel sheets 10a, 10b, in the adhesion step. Accordingly, it becomes possible to simultaneously pressurize and heat the plurality of planned heating regions 11a to 111. Therefore, when manufacturing the laminated core, the adhesion of the mutual electrical steel sheets 10 can be performed more efficiently.

Further, in the present embodiment, the heating parts 212a to 2121, 222a to 2221 are moved in the direction of the electrical steel sheets 10, to thereby make the heating parts 212a to 2121, 222a to 2221 to be brought into contact with the planned heating regions 11a to 11l of the outermost electrical steel sheets 10a, 10b, in the adhesion step. Accordingly, it is possible to reduce the movement amount of the electrical steel sheets 10 in the adhesion step. Therefore, it is possible to reduce the possibility that the positions of the plurality of electrical steel sheets are displaced.

Further, in the present embodiment, the number of electrical steel sheets 10 to be adhered by one time of pressurization and heating in the adhesion step, is set to three or more. Therefore, when manufacturing the laminated core, the adhesion of the mutual electrical steel sheets 10 can be performed more efficiently.

Further, in the present embodiment, the cutting of the electrical steel sheets is not performed simultaneously with the pressurization and heating of the planned heating regions 11a to 11l of the outermost electrical steel sheets 10a, 10b. Therefore, it is possible to further reduce the possibility that the plurality of electrical steel sheets cannot be securely adhered, for example.

### (Modified examples)

The present embodiment exemplified the case where each of the heating parts 212a to 2121, 222a to 2221 has the heating element. However, it does not always have to be designed as above as long as the partial regions of the sheet surfaces of the outermost electrical steel sheets 10a, 10b are simultaneously pressurized and heated. For example, it is also possible to design as follows.

The heating parts 212a to 2121, 222a to 2221 may also have laser oscillators. The laser oscillators irradiate the partial regions of the sheet surfaces of the outermost electrical steel sheets 10a, 10b with a laser beam, to thereby heat the partial regions of the sheet surfaces of the outermost electrical steel sheets 10a, 10b. For example, in a state where the heating parts 212a to 2121, 222a to 2221 are brought into contact with the sheet surfaces of the outermost electrical steel sheets 10a, 10b, they irradiate the partial regions of the outermost electrical steel sheets 10a, 10b with the laser beam.

In order to realize the above, hollow portions opening at surfaces facing the outermost electrical steel sheets 10a, 10b, of the surfaces of the heating parts 212a to 2121, 222a to 2221, may also be formed on the heating parts 212a to 2121, 222a to 2221, for example. The laser oscillators may also be provided in the hollow portions of the heating parts 212a to 212l, 222a to 2221. Further, it is also possible to heat the partial regions of the sheet surfaces of the outermost electrical steel sheets 10a, 10b, by irradiating the partial regions of the sheet surfaces of the outermost electrical steel sheets 10a, 10b with, not the laser beam but an electromagnetic wave (infrared ray, for example) other than the laser beam.

Further, the heating parts 212a to 2121, 222a to 2221 may also be utilized as electrodes. In this case, it is also possible to apply electric potentials to the heating parts 212a to 2121, 222a to 2221 in a state where the heating parts 212a to 2121, 222a to 2221 are brought into contact with the partial regions of the sheet surfaces of the outermost electrical steel sheets 10a, 10b. In this case, it is also possible to heat the partial regions of the sheet surfaces of the outermost electrical steel sheets 10a, 10b by currents that flow through the heating parts 212a to 2121, the electrical steel sheet group 100, and the heating parts 222a to 2221.

As explained in the present embodiment, when the heating parts 212a to 2121, 222a to 2221 generate heat, the contact heating is performed by the heating parts 212a to 2121, 222a to 2221. Also when the heating parts 212a to 2121, 222a to 2221 are utilized as the electrodes, the contact heating is performed by the heating parts 212a to 2121, 222a to 2221. In these cases, at the sheet surfaces of the outermost electrical steel sheets 10a, 10b, the regions that are brought into contact with the heating parts 212a to 2121, 222a to 2221, and the regions that receive heat from the heating parts 212a to 2121, 222a to 2221, become the same. On the other hand, in the case where the laser oscillators are provided in the hollow portions that open on the outermost electrical steel sheets 10a, 10b side, as described above, the non-contact heating is performed by the heating parts 212a to 2121, 222a to 2221. In this case, at the sheet surfaces of the outermost electrical steel sheets 10a, 10b, the regions that are brought into contact with the heating parts 212a to 2121, 222a to 2221, and the regions that receive heat from the heating parts 212a to 2121, 222a to 2221, become different regions. For example, when the shape of the contact region of each of the heating parts 212a to 2121, 222a to 2221 is a hollow circle, the region that is brought into contact with each of the heating parts 212a to 2121, 222a to 2221, becomes a region obtained by removing a region of circle whose diameter is an inside diameter of the hollow circle from a region of circle whose diameter is an outside diameter of the hollow circle, for example. On the other hand, the region that receives heat from each of the heating parts 212a to 2121, 222a to 2221 (the region irradiated with the laser beam) becomes the whole or a part of the hollow portion of the hollow circle (the region of circle whose diameter is the inside diameter of the hollow circle), for example.

As described above, as long as the partial regions of the sheet surfaces of the outermost electrical steel sheets 10a, 10b are heated while being pressurized by the contact of the heating parts 212a to 2121, 222a to 2221 with respect to the regions, the regions that are brought into contact with the heating parts 212a to 2121, 222a to 2221 and the regions that receive heat from the heating parts 212a to 2121, 222a to 2221, may also be the same or different at the sheet surfaces of the outermost electrical steel sheets 10a, 10b.

Further, the present embodiment exemplified the case where the heating parts 212a to 2121, 222a to 2221 are brought into contact with both the sheet surfaces of the outermost electrical steel sheets 10a, 10b. However, it does not always have to be designed as above. The heating parts 212a to 2121 or 222a to 2221 may also be brought into contact with only either of the partial regions of the sheet surface of the outermost electrical steel sheet 10a and the partial regions of the sheet surface of the outermost electrical steel sheet 10b. In such a case, it is also possible to perform the adhesion step by placing the electrical steel sheet group 100 on the table so that, out of the sheet surface of the outermost electrical steel sheet 10a and the sheet surface of the outermost electrical steel sheet 10b, the sheet surface with which the heating parts 212a to 2121 or 222a to 2221 are not brought into contact, is directed downward, for example.

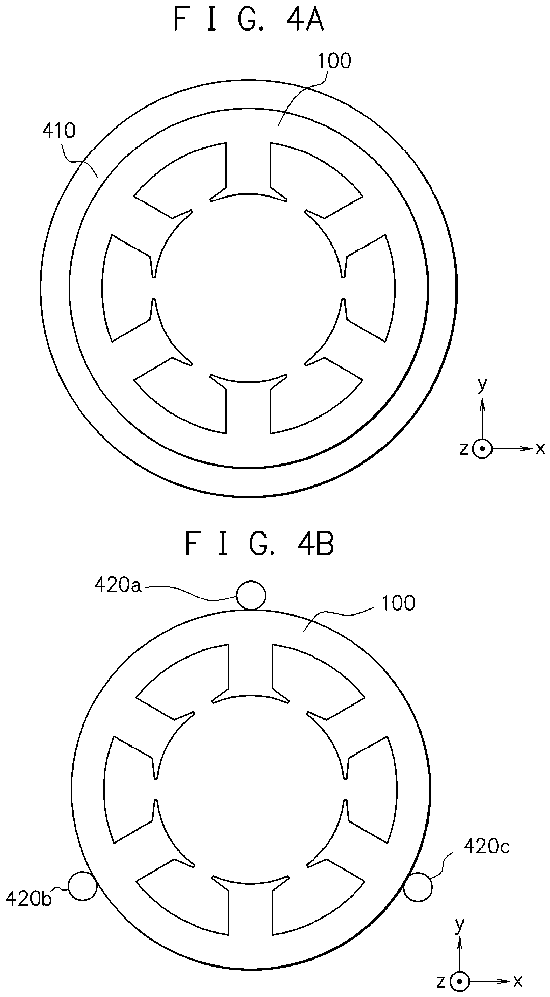

Further, in order to further reduce the possibility that the positions in the sheet surface direction of the electrical steel sheets 10 are displaced, it is also possible to perform the adhesion step in a state where one or a plurality of positional displacement preventing parts are arranged so as to face side surfaces of the plurality of electrical steel sheets 10 (the electrical steel sheet group 100) laminated in the lamination step. Fig. 4A is a view illustrating a first example of the positional displacement preventing part. Fig. 4B is a view illustrating a second example of the positional displacement preventing part. Each of Fig. 4A and Fig. 4B is a view illustrating a state where the electrical steel sheet group 100 is seen from the lamination direction (z-axis direction).

Fig. 4A exemplifies a hollow positional displacement preventing part 410. Fig. 4A exemplifies a case where the hollow positional displacement preventing part 410 has a hollow columnar shape. The electrical steel sheet group 100 is arranged in a hollow portion of the hollow positional displacement preventing part 410. Therefore, an inside diameter of the positional displacement preventing part 410 becomes equal to or greater than an outside diameter of the electrical steel sheet 10. In this case, a distance between the hollow positional displacement preventing part 410 and the electrical steel sheet group 100 is preferably as short as possible. For example, the distance between the hollow positional displacement preventing part 410 and the electrical steel sheet group 100 is preferably 5 mm or less, more preferably 3 mm or less, and still more preferably 1 mm or less. Further, an inner wall surface of the hollow positional displacement preventing part 410 preferably faces the entire side surface of the electrical steel sheet group 100 (sheet surface ends of all of the electrical steel sheets 10 laminated in the lamination step). In this case, a length in the lamination direction of the electrical steel sheets may also be the same between the hollow positional displacement preventing part 410 and the plurality of electrical steel sheets 10 (the electrical steel sheet group 100) laminated in the lamination step. Further, in this case, the length in the lamination direction of the electrical steel sheets of the hollow positional displacement preventing part 410 may also be longer than that of the plurality of electrical steel sheets 10 (the electrical steel sheet group 100) laminated in the lamination step. Note that the shape of the hollow portion of the hollow positional displacement preventing part 410 is determined in accordance with the shape of the plurality of soft magnetic material sheets (electrical steel sheets, in the present embodiment) to be laminated. Further, the positional displacement preventing part 410 is configured so that its mechanical strength is not lowered by the contact with respect to the electrical steel sheet group 100.

Fig. 4B exemplifies bar-shaped positional displacement preventing parts 420a to 420c. Fig. 4B exemplifies a case where each of the positional displacement preventing parts 420a to 420c has a solid columnar shape. The bar-shaped positional displacement preventing parts 420a to 420c are arranged so that side surfaces thereof are brought into contact with the side surface of the electrical steel sheet group 100 (the plurality of electrical steel sheets 10 laminated in the lamination step). It is preferable that the side surfaces of the bar-shaped positional displacement preventing parts 420a to 420c are respectively brought into contact with parts of sheet surface ends of all of the electrical steel sheets 10 laminated in the lamination step. In this case, the length in the lamination direction of the electrical steel sheets may also be the same between the bar-shaped positional displacement preventing parts 420a to 420c and the plurality of electrical steel sheets 10 (the electrical steel sheet group 100) laminated in the lamination step. Further, in this case, the length in the lamination direction of the electrical steel sheets of the bar-shaped positional displacement preventing parts 420a to 420c may also be longer than that of the plurality of electrical steel sheets 10 (the electrical steel sheet group 100) laminated in the lamination step.

Further, Fig. 4B exemplifies a case where the number of bar-shaped positional displacement preventing parts 420a to 420c is three, from a viewpoint of realizing both the further reduction in the possibility that the positions in the sheet surface direction (the x-y plane direction in Fig. 1 to Fig. 3) of the electrical steel sheets 10 are displaced, and the reduction in the number of positional displacement preventing parts. However, the number of bar-shaped positional displacement preventing parts may also be four or more. Further, for example, one or two bar-shaped positional displacement preventing parts may also be arranged at a position at which it is assumed that the position in the sheet surface direction is likely to be displaced. Note that the shape of the bar-shaped positional displacement preventing parts 420a to 420c is not limited to the solid columnar shape, and it may also be a prismatic shape, for example. Further, the positional displacement preventing parts 420a to 420c are configured so that the mechanical strength thereof is not lowered by the contact with respect to the electrical steel sheet group 100.

The positional displacement preventing parts 410, 420a to 420c as illustrated in Fig. 4A and Fig. 4B may also be heated to a temperature equal to or more than the temperature at which the adhesive ability of the adherable insulating coating is exhibited. If it is designed as above, regions of the sheet surface of the electrical steel sheet 10, in the vicinity of regions facing the positional displacement preventing parts 410, 420a to 420c, can be partially adhered.

### (Other embodiments)

It should be noted that the above explained embodiments of the present invention merely illustrate concrete examples of implementing the present invention, and the technical scope of the present invention is not to be construed in a restrictive manner by these embodiments. That is, the present invention may be implemented in various forms without departing from the technical spirit or main features thereof.

### INDUSTRIAL APPLICABILITY

The present invention can be utilized for manufacturing a laminated core, for example.

## Claims

1. A manufacturing method of a laminated core in which a laminated core is manufactured by using a plurality of soft magnetic material sheets each having an insulating coating that exhibits adhesive ability through heating, formed on an entire sheet surface thereof, the manufacturing method of the laminated core comprising:
a lamination step of laminating the plurality of soft magnetic material sheets; and
an adhesion step of making the plurality of soft magnetic material sheets laminated by the lamination step adhere to each other by making the adhesive ability to be exhibited, wherein:
in the adhesion step, a heating part is brought into contact with a partial region of a sheet surface of an outermost soft magnetic material sheet to simultaneously pressurize and heat the region; and
the outermost soft magnetic material sheet corresponds to a soft magnetic material sheet positioned at one end or both ends in a lamination direction, out of the plurality of soft magnetic material sheets laminated by the lamination step.

2. The manufacturing method of the laminated core according to claim 1, wherein:
in the adhesion step, the heating part is brought into contact with a plurality of regions of one sheet surface of the outermost soft magnetic material sheet; and
two or more of regions out of the plurality of regions are at positions separated from each other.

3. The manufacturing method of the laminated core according to claim 2, wherein
in the adhesion step, a plurality of the heating parts are simultaneously brought into contact with the plurality of regions to perform simultaneous pressurization and heating of the region, at the plurality of regions at the same time.

4. The manufacturing method of the laminated core according to any one of claims 1 to 3, wherein
in the adhesion step, the heating part is moved in a direction of the soft magnetic material sheet to make the heating part to be brought into contact with the region.

5. The manufacturing method of the laminated core according to any one of claims 1 to 4, wherein
the number of the soft magnetic material sheets to be adhered by one time of the pressurization and heating is three or more.

6. The manufacturing method of the laminated core according to any one of claims 1 to 5, wherein
cutting of the soft magnetic material sheet is not performed simultaneously with the pressurization and heating.

7. A manufacturing apparatus of a laminated core in which a laminated core is manufactured by using a plurality of soft magnetic material sheets each having an insulating coating that exhibits adhesive ability through heating, formed on an entire sheet surface thereof, the manufacturing apparatus of the laminated core comprising:
a heating part that heats the soft magnetic material sheet for making the adhesive ability to be exhibited;
a pressurization processing means that performs processing for making the heating part to be brought into contact with an outermost soft magnetic material sheet to pressurize the soft magnetic material sheet; and
a heating processing means that performs processing for heating the soft magnetic material sheet by using the heating part, wherein:
the outermost soft magnetic material sheet corresponds to a soft magnetic material sheet positioned at one end or both ends in a lamination direction, out of the plurality of soft magnetic material sheets that are laminated; and
by making the heating part to be brought into contact with a partial region of a sheet surface of the outermost soft magnetic material sheet by using the pressurization processing means, and heating the soft magnetic material sheet with the heating part by using the heating processing means at the same time, the region is simultaneously pressurized and heated.

8. The manufacturing apparatus of the laminated core according to claim 7, wherein:
the pressurization processing means makes the heating part to be brought into contact with a plurality of regions of one sheet surface of the outermost soft magnetic material sheet; and
two or more of regions out of the plurality of regions are at positions separated from each other.

9. The manufacturing apparatus of the laminated core according to claim 8, wherein:
there are a plurality of the heating parts; and
the pressurization processing means makes the plurality of heating parts to be simultaneously brought into contact with the plurality of regions.

10. The manufacturing apparatus of the laminated core according to any one of claims 7 to 9, wherein
the pressurization processing means makes the heating part move in a direction of the soft magnetic material sheet to make the heating part to be brought into contact with the region.

11. The manufacturing apparatus of the laminated core according to any one of claims 7 to 10, wherein
the number of the soft magnetic material sheets to be adhered by one time of the pressurization and heating is three or more.

12. The manufacturing apparatus of the laminated core according to any one of claims 7 to 11, wherein
cutting of the soft magnetic material sheet is not performed simultaneously with the pressurization and heating.

13. A laminated core configured by laminating a plurality of soft magnetic material sheets each having an insulating coating that exhibits adhesive ability through heating, formed on an entire sheet surface thereof, wherein:
the soft magnetic material sheets adjacent in a lamination direction are mutually adhered at partial regions of the sheet surfaces of the soft magnetic material sheets;
the number of regions, at one sheet surface of the soft magnetic material sheet, adhered to the sheet surface of the soft magnetic material sheet adjacent in the lamination direction, is 0.3 × Nt or more and 6.0 × Nt or less;
the laminated core is a stator core or a rotor core;
when the laminated core is a stator core, Nt is the number of teeth of the stator core; and
when the laminated core is a rotor core, Nt is the number of teeth of a stator core to be paired with the rotor core.

14. A laminated core comprising a plurality of soft magnetic material sheets each having an insulating coating that exhibits adhesive ability through heating, formed on an entire sheet surface thereof, wherein:
the laminated core is manufactured by steps including:
a lamination step of laminating the plurality of soft magnetic material sheets; and
an adhesion step of making the plurality of soft magnetic material sheets laminated by the lamination step adhere to each other by making the adhesive ability to be exhibited;
in the adhesion step, a heating part is brought into contact with a partial region of a sheet surface of an outermost soft magnetic material sheet to simultaneously pressurize and heat the region; and
the outermost soft magnetic material sheet corresponds to a soft magnetic material sheet positioned at one end or both ends in a lamination direction, out of the plurality of soft magnetic material sheets laminated by the lamination step.

15. A rotary electric machine comprising the laminated core according to claim 13 or 14.
